# EUROPÄISCHE PATENTSCHRIFT

(11) **EP 1 062 860 B1**
(45) Veröffentlichungstag und Bekanntmachung des Hinweises auf die Patenterteilung: **12.01.2005**
(21) Anmeldenummer: 00112466.8
(22) Anmeldetag: 10.06.2000
(51) Int. Cl.: A01F 15/10

(54) **Vorrichtung für Erntefahrzeuge, insbesondere für landwirtschaftliche Aufsammelballenpressen**
Device for harvesting vehicles, particularly for agricultural baling presses
Dispositif pour vehicules de récolte, notamment pour presses à balles agricoles

(30) Priorität: 22.06.1999 DE 19928521
(43) Veröffentlichungstag der Anmeldung: 27.12.2000
(73) Patentinhaber: Welger Maschinenfabrik GmbH, 38304 Wolfenbüttel (DE)
(72) Erfinder: Amshove, Martin, 48619 Heek (DE)

(56) Entgegenhaltungen:
- EP-A- 0 205 854
- EP-A- 0 815 720
- DE-A- 19 932 336
- US-A- 4 275 550

## Beschreibung

Die Erfindung betrifft eine Vorrichtung für Erntefahrzeuge, insbesondere für eine landwirtschaftliche Aufsammelballenpresse nach dem Oberbegriff des Anspruchs 1 (siehe EP-A-0 815 720).

Durch den Prospekt CLAAS Quadrant 2200 mit dem Druckvermerk 8/98 ist eine Quaderballenpresse mit Schneidwerk bekannt geworden, welche zur Beseitigung von Verstopfungen im Schneidwerkbereich einen um eine pick-up-seitige Schwenkachse nach unten wegschwenkbaren Schneidwerkboden aufweist. Da der Zuführkanalboden ortsfest ausgestaltet ist, weist diese Einrichtung den großen Nachteil auf, daß das Halmgut bei abgesenktem Schneidwerkboden unter den Zuführkanal fallt und damit verloren geht oder anschließend separat aufgesammelt werden muß.

Eine andere, durch die US PS 4,275,550 bekannte Großballenpresse weist einen zweiteiligen Zuführkanalboden auf, der gegen Federkraft bei zu hohen Vorpreßdichten im Zuführkanal nach unten vorübergehend expandieren kann. Eine vordere Bodenklappe ist um eine eingangsseitige Schwenkachse und die andere um eine ausgangsseitige Schwenkachse verschwenkbar. Die vordere Bodenklappe überlappt die hintere Bodenklappe im Verbindungsbereich, welche durch beidseitige Federn in Normalposition gehalten wird. Dem Zuführkanal ist ein Förderrotor mit festem Förderboden vorgeschaltet, so daß Verstopfungen im Eingangsbereich des Förderrotors nicht beseitigt werden können, sondern von Hand ausgeräumt werden müssen. Darüber hinaus weist die Großballenpresse keine Schneideinrichtung auf. Der Boden kann nicht geöffnet werden.

Eine ähnliche Vorrichtung mit zwei Bodentüren zeigt die EP 0 339 733, jedoch ist / sind eine oder beide Bodentüren bei Verstopfungen durch eine Hebelbetätigung aufschwenkbar. Es ist kein Schneidwerk vorgesehen und es besteht ebenfalls der Nachteil, daß das Halmgut beim Öffnen der Bodentüren nach unten auf den Erdboden fällt.

Der DE 15 07 371 A1 ist ein Zuführkanal entnehmbar, dessen obere Zuführkanalbegrenzung oben und unten unabhängig voneinander verstellbar ist, um den Zuführkanal in seiner Durchlaßhöhe eng, weit oder konisch zu verstellen zur Anpassung an unterschiedliche Erntegüter. Auch diese Einrichtung weist kein Schneidwerk auf. Besonders nachteilig ist, daß Verstopfungen, die hauptsächlich im unteren Bereich eines Zuführkanäles bei Großballenpressen auftreten, nicht beseitigt werden können, wenn man nur die Decke des Zuführkanales verstellt. Die obere Verstellung der Zuführkanaldecke ist auch deshalb problematisch, weil die Einfüllöffnung im Preßkanal nicht verändert werden kann, so daß dort neben neuen Verstopfungsproblemen auch Befestigungsprobleme für den Zuführkanal auftreten.

Die DE 42 19 719 beschreibt schließlich einen Zuführkanalboden aus gefederten Schwenksegmenten, um bei geringem Durchsatz die Zuführkanalhöhe automatisch zu verkleinern.

Der Erfindung liegt ausgehend von einer Ballenpresse der eingangs beschriebenen Art die Aufgabe zugrunde, das während der Störungsbeseitigung anfallende Erntematerial direkt dem Preßvorgang zuzuführen.

Diese Aufgabe wird erfindungsgemäß dadurch gelöst, daß der Zuführkanal einen Zuführkanalboden aufweist, welcher gemeinsam mit dem Schneidwerkboden absenkbar ist.

Erfindungsgemäß ist es grundsätzlich möglich, durch kombiniertes Absenken des Zuführkanalbodens und des Schneidwerkbodens nicht nur die Verstopfungen im Schneidwerkbereich zu beseitigen, sondern das verstopfte Material durchzufördern, wobei die größere Durchgangshöhe des Zuführkanales das Durchfördern des Materials erleichtert. Darüber hinaus wird das Hochschwenken des Schneidwerk-Zuführkanalbodens verbessert, weil die Verbindungsstelle durch die Fördereinrichtung des Zuführkanalbodens freigeräumt wird.

Dadurch, daß der Zuführkanalboden gemeinsam mit dem Schneidwerkboden absenkbar ist, kann der bisherige Hydrozylinder des Schneidwerkes weiterhin zum Heben bzw. Senken des Schneidwerkbodens dienen. Es sind lediglich zwei Zapfen am Schneidwerkboden anzubringen, in die der schwenkbare Zuführkanalboden eingehängt und verriegelt wird.

Baulich einfach ist die Ausführungsform gemäß Anspruch 4. Durch entsprechende Dimensionierung der Langlochlänge dient das Langloch als Begrenzung der Schwenkbewegung nach unten. Darüber hinaus ist die Verbindung durch Lösen der Laschen leicht trennbar, wenn der Zuführkanalboden unabhängig vom Schneidwerkboden ganz aufgeschwenkt wird, z. B. bei Wartungsarbeiten.

Ein störungsfreier Betrieb der Ballenpresse ohne manuelle Betätigung wird dadurch erreicht, daß die Absenkung selbsttätig beim Überschreiten der voreinstellbaren Kraft eines Federelementes erfolgt oder in Abhängigkeit von Maschinenparametern, wie Antriebsdrehmoment oder Ansprechen einer Überlastkupplung gesteuert wird.

Weitere zweckmäßige Ausgestaltungen ergeben sich aus den übrigen Unteransprüchen.

Nachstehend wird ein Ausführungsbeispiel des Erfindungsgegenstandes in der Zeichnung dargestellt und im folgenden näher beschrieben. Hierbei zeigt :
- Fig. 1: einen Längsschnitt einer Ballenpresse in schematischer Darstellung mit Schneidwerk- und Zuführkanalboden in Normalstellung,
- Fig. 2: eine Ansicht gemäß Figur 1, jedoch in abgesenkter, in Voll-Linie gezeichneter Stellung des Schneidwerk- und Zuführkanalbodens und in ganz geöffneter, in Strichlinie dargestellter Stellung des Zuführkanalbodens und
- Fig. 3: eine Draufsicht auf Figur 2 geschnitten in der Linie A - B.

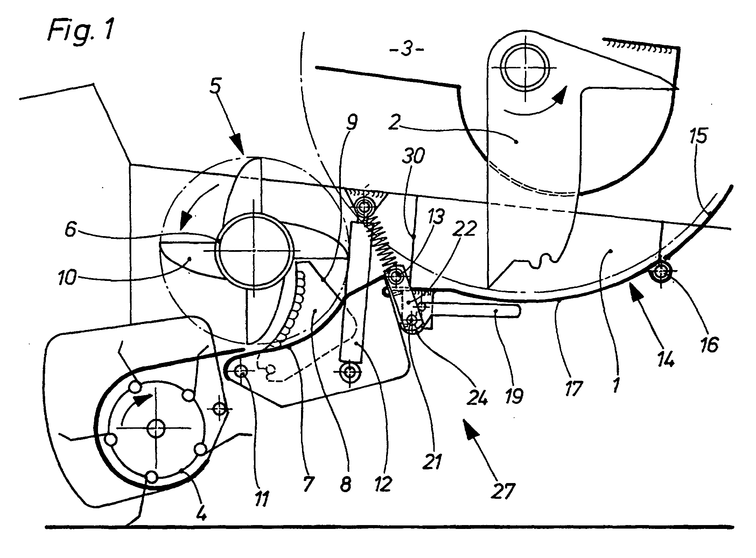

Die in Figur 1 dargestellte Aufsammelballenpresse besteht im wesentlichen aus einem Zuführkanal 1 mit einer Fördereinrichtung 2, die Halmgutmaterial von unten in einen Preßkanal 3 mit rechteckigem Querschnitt hineinfördert, das in dem Preßkanal 3 durch einen nicht dargestellten, hin- und hergehend angetriebenen Preßkolben zu einem Preßstrang verdichtet wird, der durch eine ebenfalls nicht dargestellte Bindeeinrichtung in bekannter Weise zu einzelnen Ballen abgebunden wird.

Zwischen einem Aufsammler 4 und dem Zuführkanal 1 ist eine Schneidvorrichtung 5 angeordnet, bestehend im wesentlichen aus einem Förderrotor 6 und einem Schneidwerkboden 7 mit Schneidmessern 8, die Langlochschlitze im Schneidwerkboden 7 durchgreifen und in Schneidstellung 9 in die Lücken zwischen benachbarten Förderzinken 10 in deren Umlaufbahn eingreifen. Der Schneidwerkboden 7 ist um eine benachbart zum Aufsammler 4 gelegene Querachse 11 schwenkbar. Zum Absenken bzw. Anheben des Schneidwerkbodens 7 dient ein am Preßkanal 3 und Schneidwerkboden 7 angelenkter Hydrozylinder 12. Das dem Zuführkanal 1 benachbarte Ende des Schneidwerkbodens 7 weist auf beiden Seiten einen sich in Querrichtung erstreckenden Zapfen 13 auf.

Der Zuführkanal 1 hat einen in Querrichtung geteilten Zuführkanalboden 14. Das obere Bodenteil 15 ist ortsfest an dem Preßkanal 3 befestigt und weist eine Querachse 16 auf, um die das untere Bodenteil 17 schwenkbar ist. Am zum Schneidwerkboden 7 gerichteten freien Ende des unteren Bodenteiles 17 sind an der Unterseite auf beiden Seiten nach unten gerichtete Flacheisen befestigt, die jeweils eine unten offene U-förmige Ausnehmung 18 besitzen und jeweils einen um eine Querachse schwenkbaren Verriegelungshebel 19.

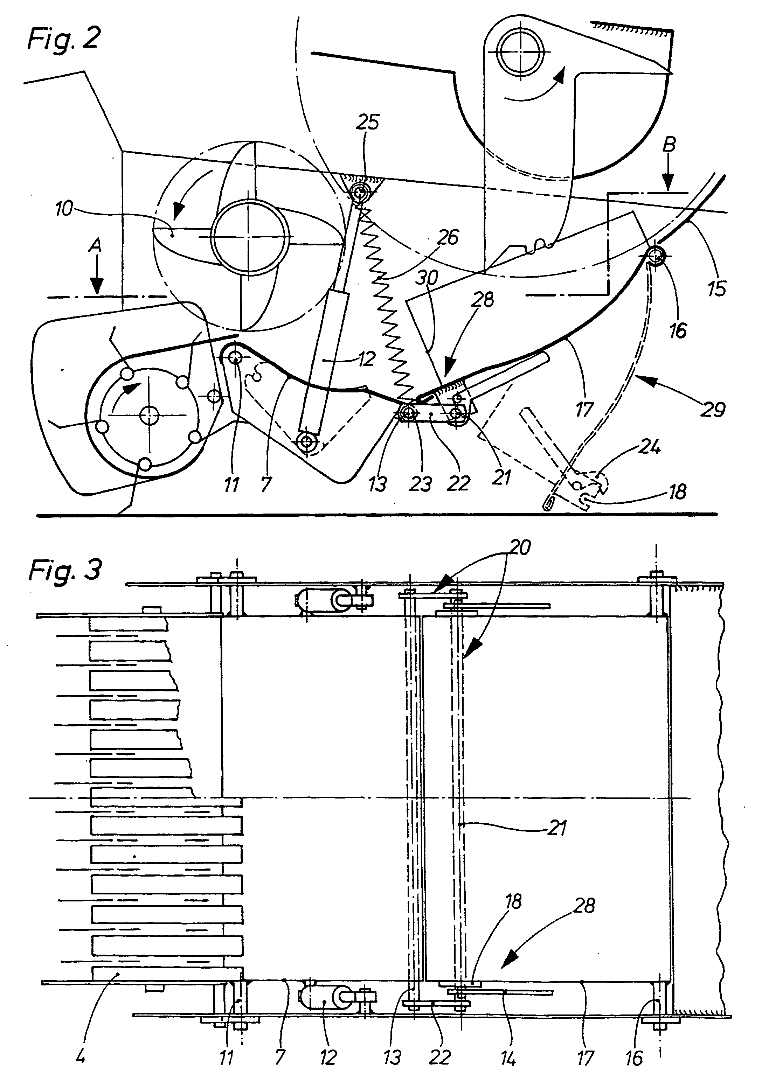

Wie am besten aus Figur 2 ersichtlich, erfolgt die Verbindung zwischen Schneidwerkboden 7 und unterem Bodenteil 17 des Zuführkanalbodens 14 durch einen U-förmigen Bügel 20, bestehend aus einer Querstange 21 und daran befestigten Laschen 22, die in parallelem Abstand zur Querstange 21 je eine Aufnahmebohrung 23 aufweisen, in die Zapfen 13 des Schneidwerkbodens 7 greifen. Die U-förmigen Ausnehmungen 18 des unteren Bodenteiles 17 sind von oben in die Querstange 21 eingehängt und werden in verriegelter Stellung vom Haken 24 des Verriegelungshebels 19 umgriffen. Das untere Bodenteil 17 ist dadurch um zwei parallel versetzte Drehachsen 13, 21 gelenkig mit dem Schneidwerkboden 7 so verbunden, daß einerseits ein Längenausgleich beim Verschwenken von Bodenteil 17 und Schneidwerkboden 7 besteht und andererseits der Aufschwenkweg nach unten begrenzt wird. Alternativ können auch andere Schiebeführungen, wie Langlochlaschen oder Kniehebel verwendet werden. Zwischen Zapfen 13 und Anlenkbolzen 25 des Hydrozylinders 12 ist ein Federelement 26 gespannt, das das Schneidwerk mit dem Bodenteil 17 in die in Fig. 1 dargestellte, normale Betriebsstellung 27 zieht, in der der Schneidwerkboden 7 durch den Druck des Hydrozylinders 12 oder durch die Kraft eines anderen Energiespeichers gehalten wird.

Tritt im Bereich der Schneidvorrichtung 5 eine Verstopfung auf, die der Schlepperfahrer durch erhöhten Schwergang der Presse, Ansprechen der Nockenschaltkupplung, Halmgutstau über dem Aufsammler oder durch ein Überlastsignal erkennt, betätigt der Schlepperfahrer den Hydrozylinder 12, so daß dieser ausfährt und den Schneidwerkboden 7 mit dem unteren Bodenteil 17 bis maximal in die in Figur 2 gezeichnete, teilgeöffnete Stellung 28 verschwenkt, wobei der U-förmige Bügel 20 aus seiner aufwärts gerichteten Lage gemäß Figur 1 in eine etwa horizontale Lage verschwenkt. Der Schneidwerkboden 7 überlappt das untere Bodenteil 17 im Verbindungsbereich in Betriebsstellung gemäß Figur 1. Durch das Öffnen des Schneidwerkbodens 7 und des unteren Bodenteiles 17 wird die Verstopfung beseitigt und das Material ungehindert in den Preßkanal 3 gefördert mit Hilfe de Födereinrichtung 2. Häufig reicht schon ein geringes Öffnen des Schneidwerkbodens 7 / Bodenteiles 17 aus, um einen Halmgutstau zu beseitigen. Besonders komfortabel arbeitet die Ballenpresse, wenn das Absenken von Schneidwerkboden 7 und unterem Bodenteil 17 in Abhängigkeit von Drehmomentsensoren des Pressenantriebes oder Überlastkupplungssensoren automatisch gesteuert wird. Bei ausnahmsweise im Bereich der Fördereinrichtung 2 auftretenden Verstopfungen oder Wartungsarbeiten läßt sich das untere Bodenteil 17 nach Entriegelung der Verriegelungshebel 19 auch unabhängig vom Schneidwerkboden 7 in eine in Figur 2 gestrichelt dargestellte Stellung ganz öffnen.

Wie in Fig. 1 und 2 gezeigt, verschwenkt der Zuführkanalboden 14 gemeinsam mit seitlichen Kanalbegrenzungswänden 30. Alternativ kann auch nur die Zuführkanalbodenwand 14 oder auch der gesamte Zuführkanal 1 verschwenkt werden. Anstelle einer Schwenkbewegung kann der Zuführkanalboden bzw. der Zuführkanal auch parallel zu sich selbst abgesenkt werden.

## Patentansprüche

1. Vorrichtung für Emtefahrzeuge, insbesondere für landwirtschaftliche Aufsammelballenpressen, bestehend aus einem Zuführkanal (1) und einer diesem vorgeschalteten Schneidvorrichtung (5) mit einem nach unten wegschwenkbaren Schneidwerkboden (7) vorgeschaltet ist, wobei der Zuführkanal von unten in einen Presskanal (3) mündet, **dadurch gekennzeichnet, dass** der Zuführkanal (1) einen Zuführkanalboden (14, 17) aufweist, welcher gemeinsam mit dem Schneidwerkboden (7) absenkbar ist.

2. Vorrichtung nach Anspruch 1, **dadurch gekennzeichnet, daß** der Zuführkanalboden (14, 17) mit seinem dem Preßkanal (3) zugewandten Ende um eine unter einer Preßkanal-Einlaßöffnung liegende Querachse (16) nach unten aufschwenkbar ist

3. Vorrichtung nach Anspruch 1 oder 2, **dadurch gekennzeichnet, daß** der Zuführkanalboden (14, 17) und der Schneidwerkboden (7) durch ein Koppelelement (13, 21, 22) gelenkig miteinander verbunden sind, das zwei in parallelem Abstand voneinander angeordnete Drehachsen (13, 21) aufweist.

4. Vorrichtung nach Anspruch 1 oder 2, **dadurch gekennzeichnet, daß** der Schneidwerkboden (7) mit dem Zuführkanalboden (14, 17) durch eine Langlochführung verbunden ist

5. Vorrichtung nach Anspruch 3 oder 4, **dadurch gekennzeichnet, daß** die Verbindungsstelle von Zuführkanalboden (14, 17) und Schneidwerkboden (7) Schnellverschlüsse (19) aufweist.

6. Vorrichtung nach einem oder mehreren der vorhergehenden Ansprüche, **dadurch gekennzeichnet, daß** die Absenkung durch mechanische, elektrische oder hydraulische (12) Antriebe erfolgt.

7. Vorrichtung nach einem oder mehreren der vorhergehenden Ansprüche, **dadurch gekennzeichnet, daß** der Zuführkanalboden (14, 17) unabhängig vom Schneidwerkboden (7) aufschwenkbar ist.

8. Vorrichtung nach einem oder mehreren der vorhergehenden Ansprüche, **dadurch gekennzeichnet, daß** der Zuführkanalboden (14, 17) Förderelemente, wie Walzen, Förderketten oder Förderriemen aufweist.

9. Vorrichtung nach einem oder mehreren der vorhergehenden Ansprüche, **dadurch gekennzeichnet, daß** die Absenkung selbsttätig bei Überschreiten der voreinstellbaren Kraft eines Federelementes (26) erfolgt oder in Abhängigkeit von Maschinenparametern, wie Antriebsdrehmoment oder Ansprechen einer Überlastkupplung gesteuert wird.

## Claims

1. Device for harvesting vehicles, in particular for agricultural pick-up balers, comprising a feeder channel (1) and a cutting device (5) positioned in front of it with a cutter base (7) which can be swung downwards out of the way, the feeder channel opening out from below into a compression channel (3),
**characterised in that** ,
the feeder channel (1) has a feeder channel base (14, 17) which can be lowered together with the cutter base (7).

2. Device as in Claim 1,
**characterised in that**
the feeder channel base (14, 17), at the end facing towards the compression channel (3), can be swung open downwards about a transverse axis (16) that is underneath a compression channel intake opening.

3. Device as in Claim 1 or 2,
**characterised in that**
the feeder channel base (14, 17) and the cutter base (7) are connected flexibly to each other by a coupling element (13, 21, 22) which has two axes of rotation (13,21) positioned at a parallel distance from each other.

4. Device as in Claim 1 or 2,
**characterised in that**
the cutter base (7) is connected to the feeder channel base (14, 17) by a slot guide.

5. Device as in Claim 3 or 4,
**characterised in that**
the connection between the feeder channel base (14, 17) and the cutter base (7) has snap closures (19).

6. Device as in one or more of the preceding Claims,
**characterised in that**
the lowering action is effected by mechanical, electrical or hydraulic (12) drive sources.

7. Device as in one of more of the preceding Claims,
**characterised in that**
the feeder channel base (14, 17) can be swung open independently of the cutter base (7).

8. Device as in one or more of the preceding Claims,
**characterised in that**
the feeder channel base (14, 17) has conveying elements such as rollers, conveyor chains or conveyor belts.

9. Device as in one or more of the preceding Claims,
**characterised in that**
the lowering action is operated automatically where the presettable force of a spring element (26) is exceeded, or on the basis of machine parameters such as driving torque or a response to an overload coupling.

## Revendications

1. Dispositif pour moissonneuses, en particulier pour ramasseuses-presses agricoles, composé d'un canal d'alimentation (1) en amont duquel est monté un dispositif de coupe (5) comportant un fond (7) de la chambre de coupe pouvant pivoter vers le bas, le canal d'alimentation débouchant par le bas dans un canal de pressage (3), **caractérisé en ce que** le canal d'alimentation (1) présente un fond (14, 17) de canal d'alimentation qui peut être pivoté avec le fond (7) de la chambre de coupe.

2. Dispositif selon la revendication 1, **caractérisé en ce que** le fond (14, 17) du canal d'alimentation peut pivoter vers le bas par son extrémité tournée vers le canal de pressage (3) autour d'un axe transversal (16) placé sous une ouverture d'admission du canal de pressage (3).

3. Dispositif selon une des revendications 1 ou 2, **caractérisé en ce que** le fond (14, 17) du canal d'alimentation et le fond (7) de la chambre de coupe sont assemblés l'un à l'autre en articulation par un élément d'accouplement (13, 21, 22) qui présente deux axes de pivotement (13, 21) disposés à une distance parallèle l'un de l'autre.

4. Dispositif selon une des revendications 1 ou 2, **caractérisé en ce que** le fond (7) de la chambre de coupe est assemblé au fond (14, 17) du canal d'alimentation par un guide à trou oblong.

5. Dispositif selon une des revendications 3 ou 4, **caractérisé en ce que** le point d'assemblage du fond (14, 17) du canal d'alimentation et du fond (7) de la chambre de coupe présente des fermetures rapides (19).

6. Dispositif selon une ou plusieurs des revendications précédentes, **caractérisé en ce que** l'abaissement est effectué par commande mécanique, électrique ou hydraulique (12).

7. Dispositif selon une ou plusieurs des revendications précédentes, **caractérisé en ce que** le fond (14, 17) du canal d'alimentation peut être pivoté indépendamment du fond (7) de la chambre de coupe.

8. Dispositif selon une ou plusieurs des revendications précédentes, **caractérisé en ce que** le fond (14, 17) du canal d'alimentation présente des éléments d'acheminement comme rouleaux, chaînes de transport ou courroies de transport.

9. Dispositif selon une ou plusieurs des revendications précédentes, **caractérisé en ce que** l'abaissement s'effectue automatiquement en cas de dépassement de la force réglable préalablement d'un élément élastique (25) ou en fonction de paramètres de la machine comme le couple moteur ou une réaction d'un embrayage de surcharge.
